# EUROPEAN PATENT APPLICATION

(11) **EP 1 767 985 A1**
(43) Date of publication of application: **28.03.2007**
(21) Application number: 05752921.6
(22) Date of filing: 15.06.2005
(51) Int. Cl.: G02F 1/1335, G02F 1/335

(54) **OPTICAL FILM, LIQUID CRYSTAL PANEL, AND LIQUID CRYSTAL DISPLAY DEVICE**

(30) Priority: 15.06.2004 JP 2004177078
(71) Applicant: SONY CORPORATION, Tokyo 141-0001 (JP)
(72) Inventor: Enomoto, Masashi, Shinagawa-ku, Tokyo 1410001 (JP)
(74) Representative: Müller - Hoffmann & Partner
(86) International application number: PCT/JP2005/011395
(87) International publication number: WO 2005/124441

(57) **Abstract**

A liquid crystal display apparatus 1 irradiates a rear surface of a liquid crystal panel with light and displays a screen. The liquid crystal display apparatus 1 has viewing angle improvement means 10 for decreasing light at angles equal to or greater than a predetermined value in a normal direction of the liquid crystal 2 panel from light emitted from a light source and diffusing light at angles smaller than the predetermined value in the normal direction of the liquid crystal panel 2 on a display surface side of the liquid crystal panel 2.

## Description

### Technical Field

The present invention relates to an optical film, a liquid crystal panel, and a liquid crystal display apparatus that allow a viewing angle to be improved.

### Background Art

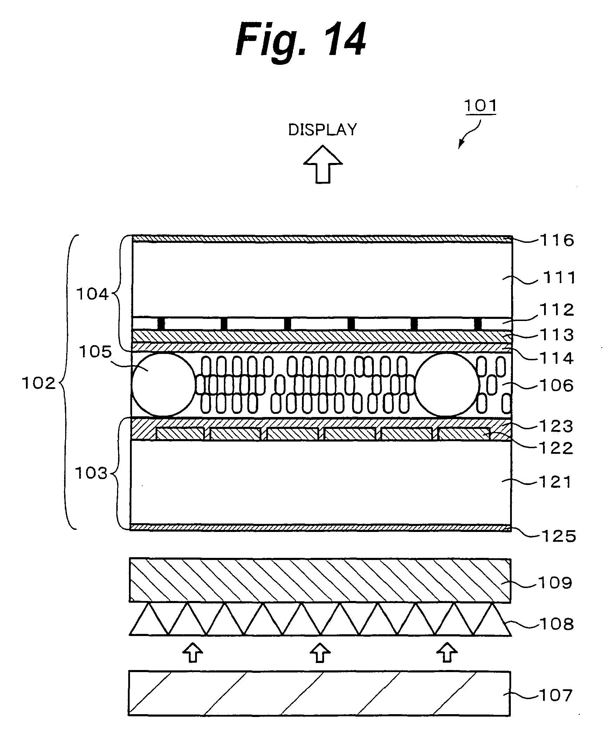

In recent years, large-sized liquid crystal display apparatuses have been widespread as TV (Television) monitors. Fig. 14 is a sectional view showing the structure of a conventional liquid crystal display apparatus 101. As shown in Fig. 14, the liquid crystal display apparatus 101 has a backlight 107, a microlens array 108, a polarized light selective transmission film 109, and a liquid crystal panel 102.

The liquid crystal panel 102 has first and second substrates 103 and 104 that are oppositely disposed with a predetermined distance through a spacer 105. In addition, the liquid crystal panel 102 has a liquid crystal layer 106 of which liquid crystal is filled between the first and second substrates 103 and 104. The liquid crystal itself has permittivity anisotropy. The permittivity of molecules of the liquid crystal and an electric field that electrodes generate interact, causing the liquid crystal to drive.

The first substrate 103 has a glass substrate 121, a transparent electrode 122 layered on one main surface of the glass substrate 121, an alignment film 123, and a polarizer (polarizing film) 125 layered on the other primary surface of the glass substrate 111. The second substrate 104 has a glass substrate 111, a color filter 112 layered on one primary surface of the glass substrate 111, a transparent electrode 113, an alignment film 114, and a polarizer (polarizing film) 116 layered on the other primary surface of the glass substrate 111.

In the liquid crystal display apparatus 101, which has such a structure, the backlight 107 emits light to the microlens array 108. The microlens array 108 improves the directivity of the light to the entire surface of the panel. The polarized light selective transmission film 109 causes the polarization plane of the light to match that of the polarizer 125 disposed on the near side of the backlight 107. Thereafter, the light passes through the polarizer 125. The polarizer 125 plane-polarizes the light. The plane-polarized light enters the liquid crystal layer 106. The polarization plane of the light is controlled by the alignment of the liquid crystal controlled by the electric field. The plane-polarized light passes through the color filter 112 and then the polarizer 116.

It has been pointed out that the conventional liquid crystal display apparatus has several drawbacks against a conventional CRT (Cathode-Ray Tube). One of these drawbacks is a narrow viewing angle. As described above, by controlling the alignment state of a liquid crystal layer with electrodes adjacent thereto, namely controlling the polarization state of light that passed through the liquid crystal layer, light that passed through a polarizing plate on the display side is turned on and off.

Thus, the refractive index varies in a direction of which liquid crystal molecules are viewed (refractive index anisotropy). In other words, light that passed through the liquid crystal layer has a polarization state that differs with the angle. When the liquid crystal panel is viewed from a diagonal direction, the contrast decreases and the gradation inverts.

For example, when a normally-black type liquid crystal display apparatus displays a black screen, since the liquid crystal layer has refractive index anisotropy, the following problem will occur. In other words, when the liquid crystal display apparatus is viewed from the normal direction, the apparatus is viewed in black. However, when the apparatus is diagonally viewed, birefringence occurs, causing polarized light to vary. As a result, since light leaks out, the liquid crystal display apparatus cannot be viewed in black.

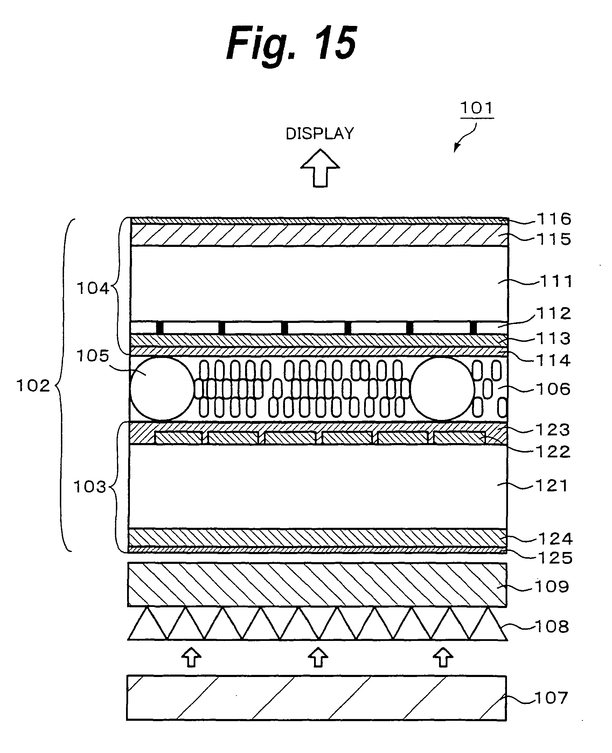

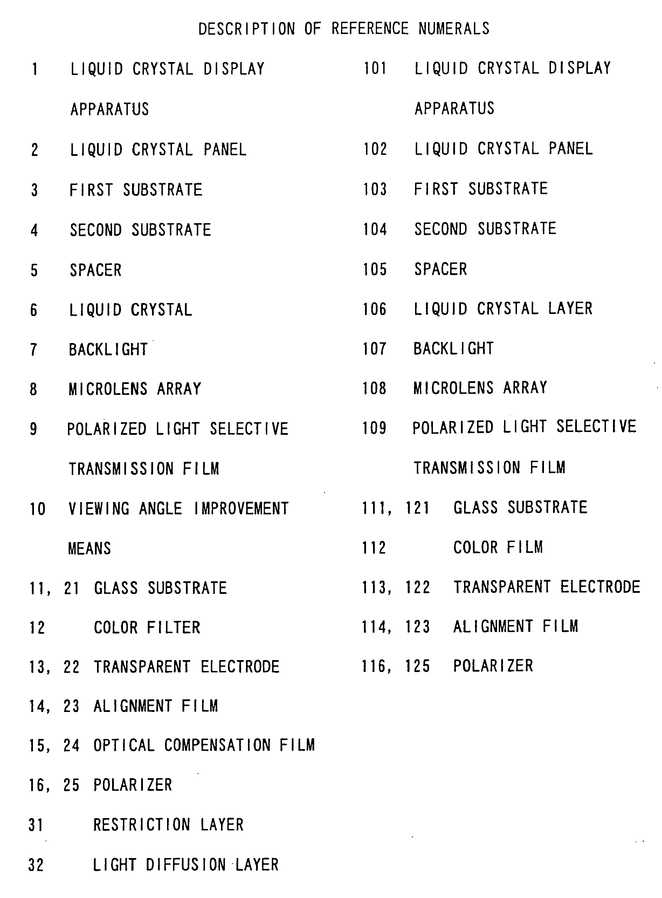

To improve the wide viewing angle of the liquid crystal display apparatus, (1) improvement of the viewing angle with a liquid crystal drive system and (2) improvement of the viewing angle with an optical compensation film are being studied.
(1) The liquid crystal drive system is divided into (a) MVA (Multi-Domain Vertical Alignment) system and (b) IPS (In-Plane Switching) system. (a) MVA system has a feature of which directions in which vertically aligned liquid crystal molecules fall are divided in a plurality of domains for each color pixel. In this system, when the apparatus is viewed from a diagonal direction, since light that passes through the individual domains is averaged, extreme variations of gradation and colors can be suppressed. In contrast, (b) IPS system has a feature of which pixel electrodes are disposed on a plane of one substrate and liquid crystal horizontally aligned against the substrate is rotated. In this system, since liquid crystal molecules do not diagonally rise, good optical characteristics (contrast, gradation, and color tone) can be accomplished.
(2) Optical compensation film
   In the method of widening the viewing angle with an optical compensation film, a negative uniaxial film (optical compensation film) is used in such a manner that light that passed through the liquid crystal layer is isotropically viewed at a wide angle. Fig. 15 is a sectional view showing the structure of a liquid crystal display apparatus 101 having an optical compensation film. As shown in Fig. 15, to cancel the influence of birefringence of liquid crystal, optical compensation films 115 and 124 are disposed between polarizers 116 and 125 and glass substrates 111 and 121, respectively.

Besides the problem of birefringence of liquid crystal, when two orthogonal polarizers are diagonally viewed, the angle of their optical axes deviates from 90 degrees, resulting in leakage of light. To suppress leakage of light, a method of using a laminate of an positive (negative) uniaxial optical compensation film whose optical axis exists on the film surface and a positive (negative) uniaxial optical compensation film whose optical axis exists in the normal direction of the film and a method of using one biaxial optical compensation film have been proposed (for example, refer to Eiichiro Tsunanaka, "Journal of the Imaging Society of Japan", 2002, vol. 41, No. 1, pp. 79 - 87).

However, when (1) liquid crystal drive system or (2) optical compensation film is used alone, since problems caused by refractive index anisotropy of liquid crystal cannot be fully solved, it is common to perform the compensations using (1) liquid crystal drive system and (2) optical compensation film in combination. In particular, in (a) MVA system, the problems caused by refractive index anisotropy cannot be fully solved. Thus, the compensations using (a) MVA system and (2) optical compensation film are often performed in combination.

However, even if (1) liquid crystal drive system and (2) optical compensation film are used in combination, optical characteristics (contrast, gradation, and color tone) on the wide angle side have not satisfied quality recommended for television applications (for example, refer to "Nikkei Microdevices", 2003, November, pp. 56 - 61). Even in the IPS system, which has a relatively high viewing angle characteristic, since the aperture ratio of the liquid crystal display apparatus is small due to the structure of electrodes, it is difficult to allow the apparatus to have a high resolution.

On the other hand, when an optical compensation film is used, optical characteristics can be remarkably improved. However, liquid crystal that is aligned only in a predetermined state is optically compensated. In other words, liquid crystal that is aligned in all drive states cannot be optically compensated. In addition, this phenomenon results from fundamental problems of which liquid crystal has birefringence and alignment of liquid crystal is changed with an electric field that is driven. Thus, this phenomenon is inevitable.

To solve the foregoing problems, a method of condensing light emitted from a backlight, causing the condensed light to directly pass through a liquid crystal panel, and diffusing the light on the liquid crystal panel has been proposed (for example, refer to the specification of United State Patent No. 5396350).

However, in such a method, by widening the viewing angle, the display quality can be improved. However, since the structure of the light condensing system becomes complicated, the thickness of the liquid crystal display apparatus becomes large and the cost of the apparatus becomes much expensive.

Therefore, an object of the present invention is to provide an optical film, a liquid crystal panel, and a liquid crystal display apparatus that have excellent optical characteristics with respect to a wide viewing angle without tradeoff of a complicated structure and an increased cost.

### Disclosure of the Invention

The inventor of the present invention intensively studied for the problems of the related art. As a result, the inventor knew that it is a problem that light that passed through a polarizer disposed on the near side of a display at a wide angle, namely light that has bad optical characteristics, is viewed.

Thus, the inventor intensively studied how to prevent light that passed through the polarizer disposed on the near side of the display at a wide angle, namely light that has bad light characteristics, from being viewed. As a result, the inventor knew that when light that leaks to the wide angle side with bad optical characteristics (light at angles equal to or greater than a predetermined value in the normal direction of the liquid crystal panel) is decreased and light having good optical characteristics (light at angles smaller than the predetermined value in the normal direction of the liquid crystal panel) is scattered, excellent optical characteristics (contrast, gradation, and color tone) at a wide viewing angle can be accomplished. The present invention was made based on this study.

To solve the foregoing problems, claim 1 of the present invention is a liquid crystal display apparatus which irradiates a rear surface of a liquid crystal panel with light and displays a screen, comprising viewing angle improvement means for decreasing light at angles equal to or greater than a predetermined value in a normal direction of the liquid crystal panel from light emitted from a light source and diffusing light at angles smaller than the predetermined value in the normal direction of the liquid crystal panel on a display surface side of the liquid crystal panel.

The liquid crystal display apparatus having the foregoing structure can decrease light that leaks to the wide angle side, namely light that has bad optical characteristics, and especially scatter light in the direction of the front surface of the liquid crystal panel, namely light that has good optical characteristics.

Claim 2 of the present invention is the liquid crystal display apparatus as set forth in claim 1, wherein the viewing angle improvement means has: a restriction layer which decreases the light at angles equal to or greater than the predetermined value in the normal direction of the liquid crystal panel from the light emitted from the light source; and a light diffusion layer which diffuses light which passed through the restriction layer on the display surface side of the liquid crystal panel.

The liquid crystal display apparatus having the foregoing structure can decrease light that leaks to the wide angle side, namely light that has bad optical characteristics, with a restriction layer and scatter light that has good optical characteristics with a light diffusion layer.

Claim 3 of the present invention is the liquid crystal display apparatus as set forth in claim 2, wherein the restriction layer has a barrier which is two-dimensionally arranged; and wherein the barrier has light absorption property. In the liquid crystal display apparatus as set forth in claim 3, it is preferred that the barrier be regularly arranged. In addition, in the liquid crystal display apparatus as set froth in claim 3, specifically, the barrier is disposed perpendicular to a display surface of the liquid crystal panel.

The liquid crystal display apparatus having the foregoing structure can decrease light at angles equal to or greater than a predetermined value in the normal direction of a liquid crystal panel with a barrier and diffuse light at angles smaller than the predetermined value in the normal direction of the liquid crystal panel with a light diffusion layer.

Claim 4 of the present invention is the liquid crystal display apparatus as set forth in claim 2, wherein particles which scatter the light which passed through the restriction layer are dispersed in the diffusion layer.

The liquid crystal display apparatus having the foregoing structure can decrease light at angles equal to or greater than a predetermined value in the normal direction of a liquid crystal panel with a barrier and diffuse light at angles smaller than the predetermined value in the normal direction of the liquid crystal panel with particles.

Claim 5 of the present invention is the liquid crystal display apparatus as set forth in claim 1, wherein the viewing angle improvement means has a restriction layer on which a barrier having light absorption property is two-dimensionally arranged; and diffusion means which is disposed in the barrier and which diffuses light, and wherein the viewing angle restriction means is disposed on a full screen side of the liquid crystal panel.

The liquid crystal display apparatus having the foregoing structure can decrease light at angles equal to or greater than a predetermined value in the normal direction of a liquid crystal panel with a barrier and diffuse light at angles smaller than the predetermined value in the normal direction of the liquid crystal panel with light diffusion means.

Claim 6 of the present invention is the liquid crystal display apparatus as set forth in claim 5, wherein the diffusion means is particles dispersed in the barrier.

The liquid crystal display apparatus having the foregoing structure can decrease light at angles equal to or greater than a predetermined value in the normal direction of a liquid crystal panel with a barrier and diffuse light at angles smaller than the predetermined value in the normal direction of the liquid crystal panel with particles.

Claim 7 of the present invention is the liquid crystal display apparatus as set forth in claim 5, wherein the diffusion means is a lens disposed in the barrier. In the liquid crystal display apparatus as set forth in claim 7, it is preferred that the lens be a concave lens.

The liquid crystal display apparatus having the foregoing structure can decrease light at angles equal to or greater than a predetermined value in the normal direction of a liquid crystal panel with a barrier and diffuse light at angles smaller than the predetermined value in the normal direction of the liquid crystal panel with a lens.

Claim 8 of the present invention is the liquid crystal display apparatus as set forth in claim 7, wherein particles which diffuses light are dispersed in the lens.

The liquid crystal display apparatus having the foregoing structure can decrease light at angles equal to or greater than a predetermined value in the normal direction of a liquid crystal panel with a barrier and diffuse light at angles smaller than the predetermined value in the normal direction of the liquid crystal panel with a lens and particles.

Claim 9 of the present invention is an optical film, comprising a restriction layer which decreases light at angles equal to or greater than a predetermined value in a normal direction of a liquid crystal panel from light emitted from the liquid crystal panel.

The optical film having the foregoing structure can decrease light that leaks on the wide angle side, namely, light that has bad optical characteristics.

Claim 10 of the present invention is the optical film as set forth in claim 9, further comprising a light diffusion layer which diffuses light which passed through the restriction layer.

The optical film having the foregoing structure can decrease light that leaks on the wide angle side, namely light that has bad optical characteristics, and then especially scatter light that has good optical characteristics in the direction of the front surface of a liquid crystal panel.

Claim 11 of the present invention is a liquid crystal panel, comprising:
a first substrate and a second substrate oppositely disposed with a predetermined distance through a spacer; and
a liquid crystal layer disposed between the first substrate and the second substrate,
wherein the second substrate has:
a light insulation film which is disposed on an opposite side of the first substrate and which decreases light at angles equal to or greater than a predetermined value in a normal direction of a liquid crystal panel; and
a color film disposed at an opening portion of the light insulation film.

The liquid crystal panel having the foregoing structure can decrease light that leaks on the wide angle side, namely light that has bad optical characteristics.

Claim 12 of the present invention is a liquid crystal display apparatus which irradiates a rear surface of a liquid crystal panel with light and displays a screen, comprising:
a liquid crystal panel; and
a diffusion layer which is disposed on a display surface side of the liquid crystal panel,
wherein the liquid crystal panel has:
a first substrate and a second substrate oppositely disposed with a predetermined distance through a spacer; and
a liquid crystal layer disposed between the first substrate and the second substrate,
wherein the second substrate has:
a light insulation film which is disposed on an opposite side of the first substrate and which decreases light at angles equal to or greater than a predetermined value in a normal direction of the liquid crystal panel, and
a color film disposed at an opening portion of the light insulation film.

The liquid crystal display apparatus having the foregoing structure can decrease light that leaks on the wide angle side, namely light that has bad optical characteristics, and then scatter especially light that has good optical characteristics in the direction of the front surface of a liquid crystal panel.

As described above, according to the present invention, light at angles equal to or greater than a predetermined value in the normal direction of a liquid crystal panel is decreased. In addition, light at angles smaller than the predetermined value in the normal direction of the liquid crystal panel is diffused on the display surface side of the liquid crystal panel. Thus, light that leaks to the wide angle side, namely light that has bad optical characteristics can be decreased and especially light that has good optical characteristics in the direction of the front surface of the liquid crystal panel can be scattered. Thus, a liquid crystal display apparatus that has good optical characteristics with respect to a wide viewing angle can be accomplished without tradeoff of a complicated structure and an increased cost.

### Brief Description of Drawings

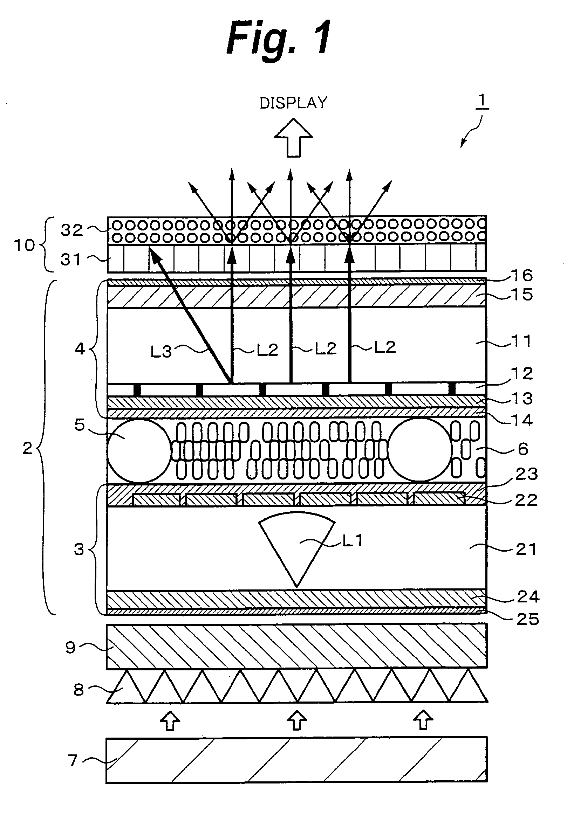

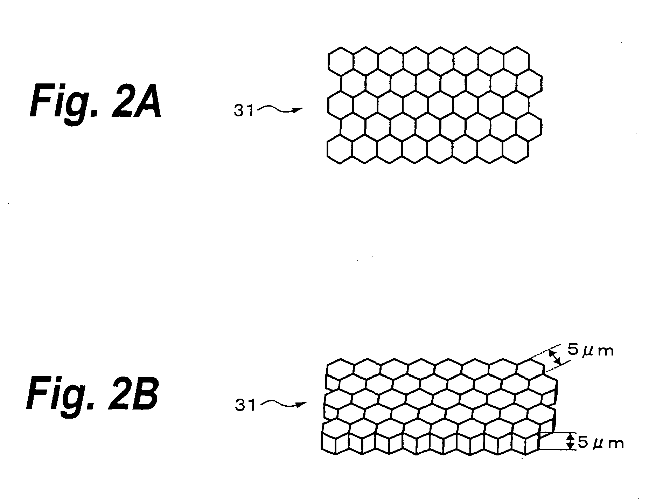

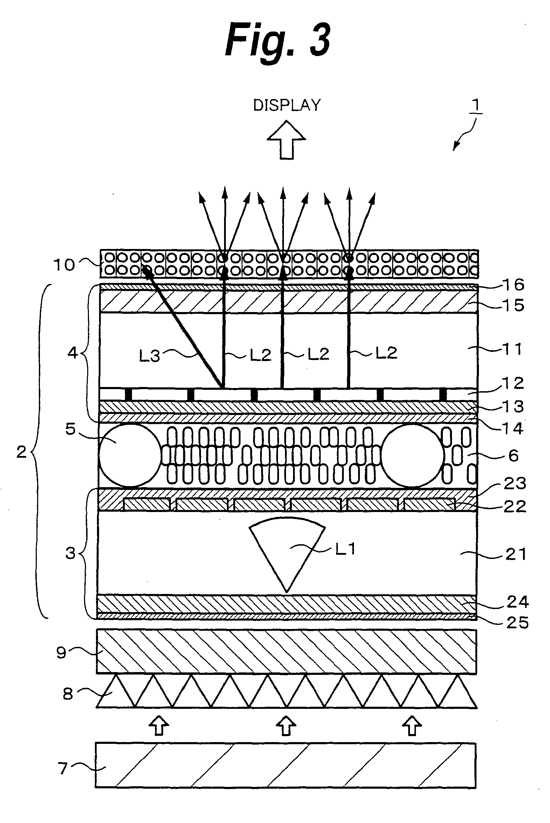

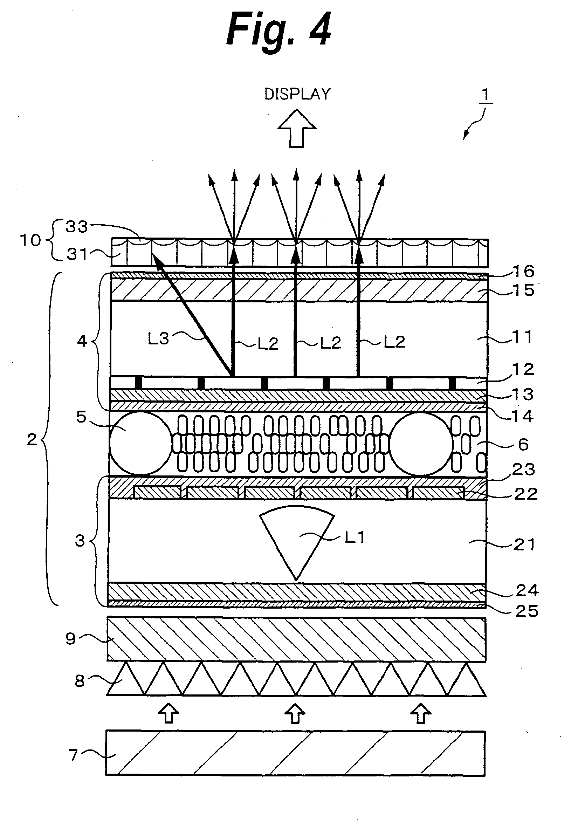

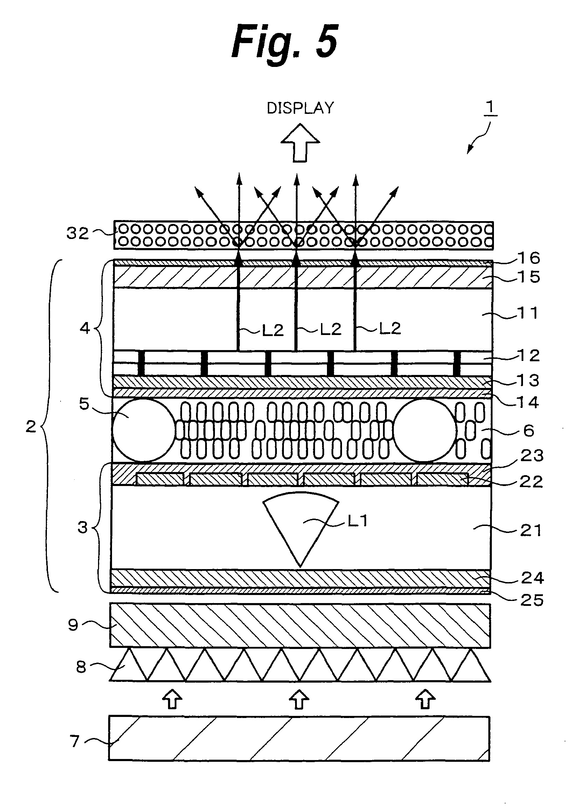

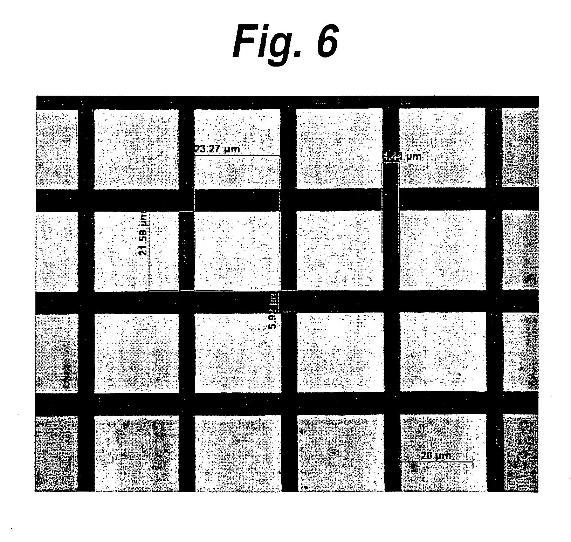

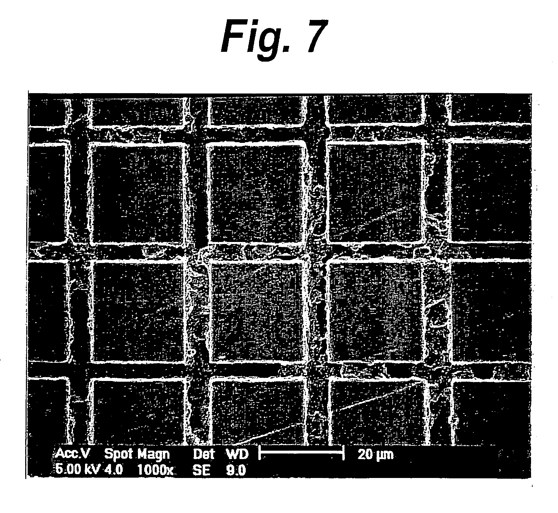

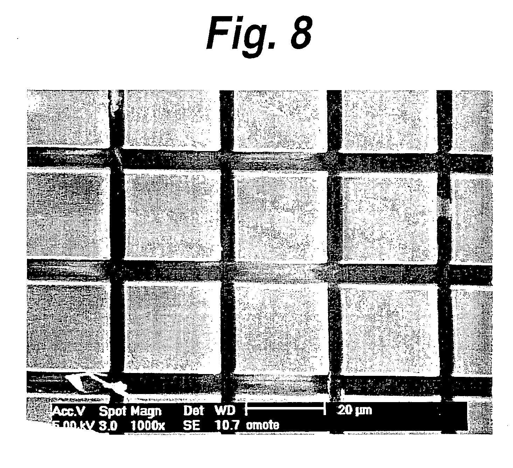

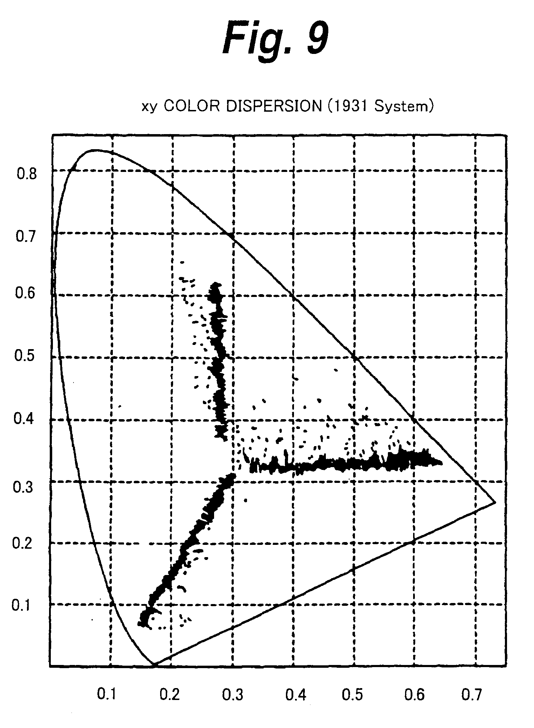

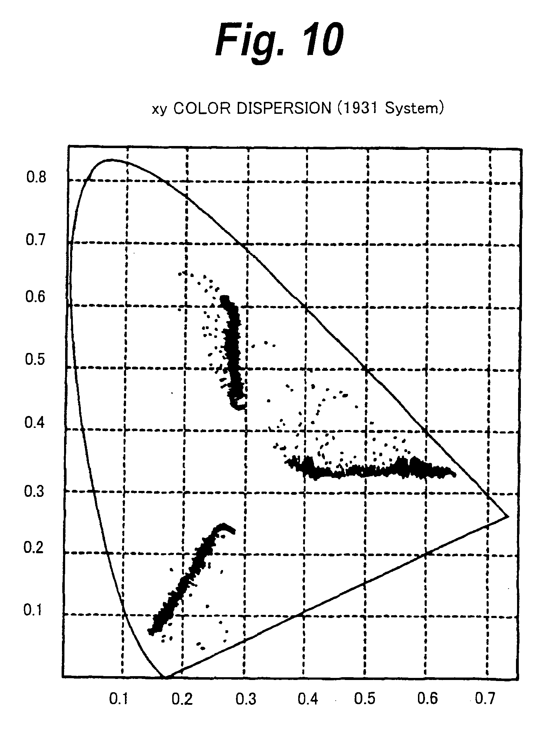

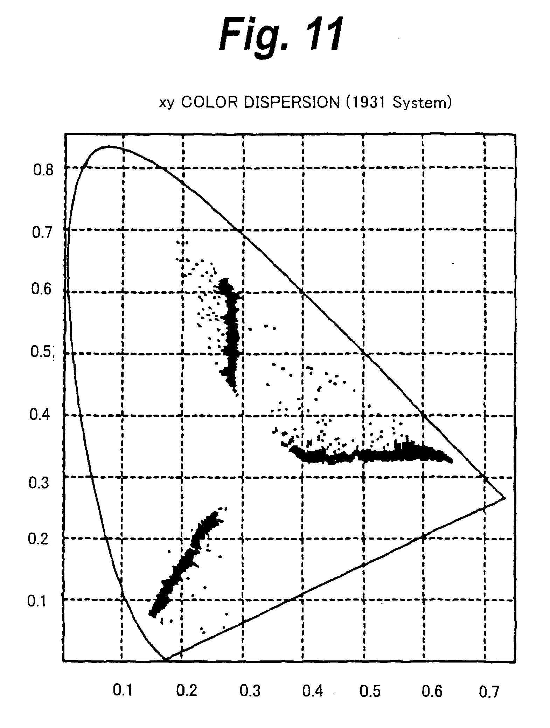

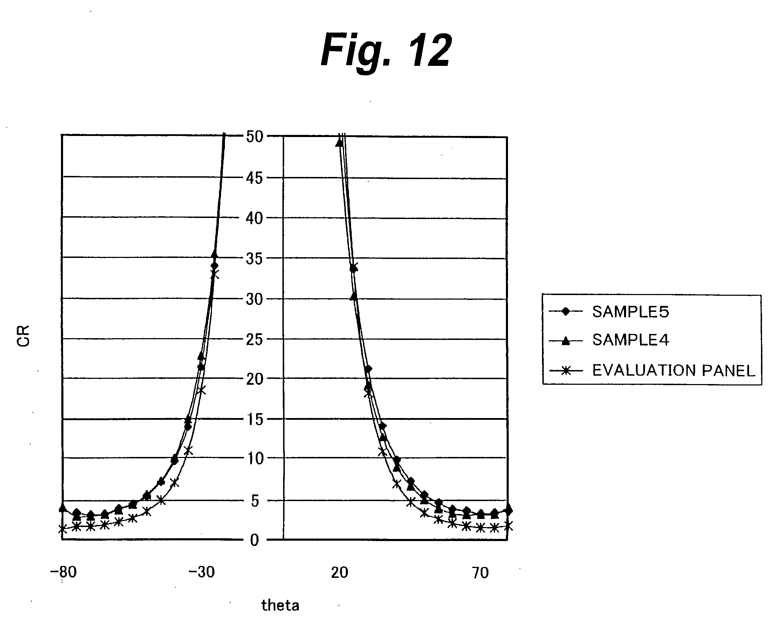

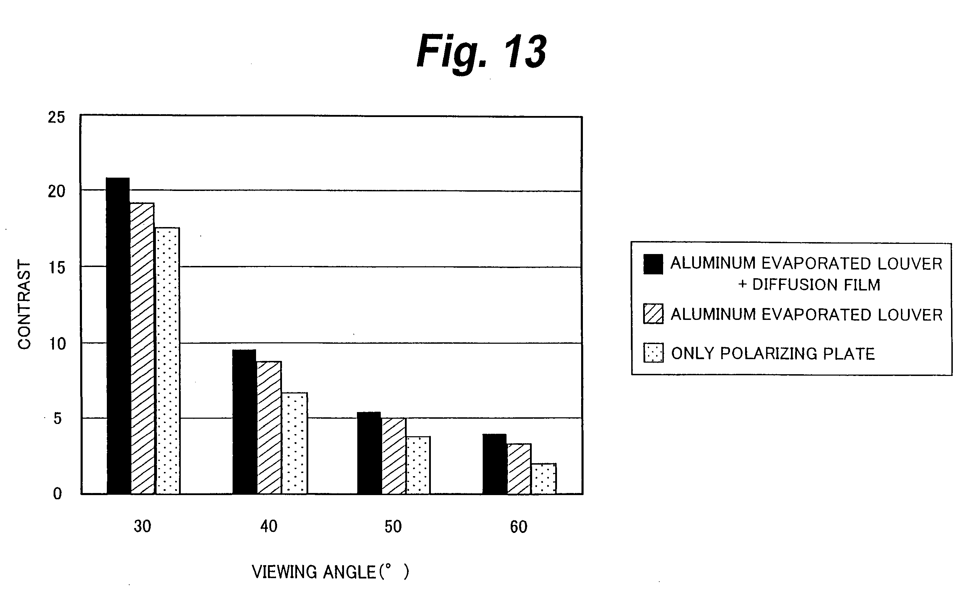

Fig. 1 is a sectional view showing an example of the structure of a liquid crystal display apparatus according to a first embodiment of the present invention; Fig. 2 is a top view and a perspective view showing an example of the structure of a restriction layer that has a honeycomb structure; Fig. 3 is a sectional view showing an example of the structure of a liquid crystal display apparatus according to a second embodiment of the present invention; Fig. 4 is a sectional view showing an example of the structure of a liquid crystal display apparatus according to a third embodiment of the present invention; Fig. 5 is a sectional view showing an example of the structure of a liquid crystal display apparatus according to a fourth embodiment of the present invention; Fig. 6 is a plan view showing a louver structure of sample 1; Fig. 7 is a plan view showing a louver structure of sample 2; Fig. 8 is a plan view showing a louver structure of sample 4; Fig. 9 is a graph showing a color temperature distribution of an evaluation panel; Fig. 10 is a graph showing a color temperature distribution of an evaluation panel having a louver film of sample 4; Fig. 11 is a graph showing a color temperature distribution of an evaluation panel having an optical film of sample 5; Fig. 12 is a graph showing measurement results of contrasts; Fig. 13 is a graph showing measurement results of contrasts; Fig. 14 is a sectional view showing the structure of a conventional liquid crystal display apparatus; and Fig. 15 is a sectional view showing the structure of a conventional liquid crystal display apparatus.
Best Modes for Carrying out the Invention

Next, with reference to the accompanying drawings, embodiments of the present invention will be described. In the following embodiments, the identical or corresponding portions are denoted by the identical reference numerals.

### (1) Structure of liquid crystal display apparatus 1

Fig. 1 is a sectional view showing an example of the structure of a liquid crystal display apparatus 1 according to a first embodiment of the present invention. As shown in Fig. 1, the liquid crystal display apparatus 1 is a so-called transmission type liquid crystal display apparatus and has a backlight (light source) 7, a microlens array 8, a polarized light selective transmission film 9, a liquid crystal panel 2, and viewing angle improvement means 10. In the following description, the side of the display screen of the liquid crystal display apparatus 1 is referred to as the display surface side, whereas the opposite side is referred to as the rear surface side. Light L₁ represents light condensed by the microlens array 8. Light L₂ represents light that is not restricted by a restriction layer 31, but passes through the restriction layer 31. Light L₃ represents light that the restriction layer 31 absorbs and prevents from passing.

Although the present invention can be applied to various types of liquid crystal display apparatuses 1, it is preferred that the present invention is applied to a liquid crystal display apparatus according to TN (Twisted Nematic) system or that according to VA (Vertical Alignment) system that allow panels having a large aperture portion and high brightness to be obtained taking account of effectiveness.

The backlight 7 is for example a CCFL (Cold Cathode Fluorescent Lamp) or an LED (Light Emitting Diode). The backlight 7 is disposed immediately below the liquid crystal panel 2. In this example, although the backlight 7 is disposed immediately below the liquid crystal panel 2 (this system is referred to as the direct type), the backlight 7 may be other than the direct type. Instead, the backlight 7, which is a CCFL or an LED, may be disposed at an edge of the liquid crystal panel 2. Light emitted from the backlight 7 may be diffused over the entire surface of the liquid crystal panel 2 through a light guide plate (this system is referred to as the edge type). When the liquid crystal panel 2 is a large-sized liquid crystal panel used for television applications and so forth, it is preferred that the backlight is used as the direct type.

The microlens array 8 is used to improve the directivity of light to the entire surface of the panel. The polarized light selective transmission film 9 is used to match the polarizing plane with that of a polarizer 25 disposed on the near side of the backlight 7 of the liquid crystal panel 2.

The liquid crystal panel 2 has first and second substrates 3 and 4 that are oppositely disposed with a predetermined distance through a spacer 5 and a liquid crystal layer 6 of which liquid crystal is filled between the first and second substrates 3 and 4. The spacer 5 keeps the first and second substrates 3 and 4 apart for the predetermined distance. Liquid crystal that composes the liquid crystal layer 6 is for example nematic liquid crystal. The alignment of the liquid crystal varies with a voltage applied between transparent electrodes 13 and 22.

The first substrate 3 has a glass substrate 21, a transparent electrode 22 layered on one primary surface of the glass substrate 21, an alignment film 23, an optical compensation film 24 layered on the other primary surface of the glass substrate 21, and a polarizer (polarizing film) 25. The second substrate 4 has a glass substrate 11, a color filter 12 layered on one primary surface of the glass substrate 11, a transparent electrode 13, an alignment film 14, an optical compensation film 15 layered on the other primary surface of the glass substrate 11, and a polarizer (polarizing film) 16.

The transparent electrodes 13 and 22 are made of an alloy oxide of for example indium and tin (ITO: Indium Tin Oxide). The alignment films 14 and 23 are films that align molecules of liquid crystal in a predetermined direction. The alignment films 14 and 23 are made of a polymer for example polyimide.

The color filter 12 displays colors. The color filter 12 has a matrix-patterned light insulation film (black matrix), an opening portion of the insulation film, namely elements of R (Red), G (Green), and B (Blue) corresponding to pixels, and a protection film that protects the light insulation film and the individual elements. Each pixel is made up of three sub pixels of R (Red), G (Green), and B (Blue). The size of each sub pixel is for example around several ten microns (30 to 90 µm) that depends on the screen size and the number of pixels.

The optical compensation films 15 and 24 are disposed both on the front surface side and the rear surface side of the liquid crystal panel 2. The optical compensation films 15 and 24 are films that compensate refractive index. The optical compensation films 15 and 24 are films of which for example optically negative uniaxial compound is formed in such a manner that the alignment angle successively changes in the direction of the thickness. Specifically, the optical compensation films 15 and 24 are made up of for example a supporting member, an alignment film layered on the supporting member, and an optically anisotropy layer of which a disc-shaped compound as a negative uniaxial compound is hybrid-aligned above the alignment film. The disc-shaped compound is for example a discotic liquid crystal type compound.

The polarizers 16 and 25 are films that causes one of orthogonally polarized components of incident light to pass and that absorb or reflect the other. The polarizers 16 and 25 are disposed on the optical compensation films 15 and 24 in such a manner that their transmission axes are perpendicular to each other.

The viewing angle improvement means 10 is made up of a restriction layer 31 that decreases light at angles equal to or greater than a predetermined value in the normal direction of the liquid crystal panel 2 and a light diffusion layer 32 that effectively diffuses light that passed through the restriction layer 31. The restriction layer 31 may be disposed apart from the light diffusion layer 32. However, it is preferred that the restriction layer 31 be disposed adjacent to the light diffusion layer 32. For example, the restriction layer 31 is disposed in contact with the rear surface side of the light diffusion layer 32. In addition, it is preferred that the restriction layer 31 be disposed in the vicinity of the display surface side or the rear surface side of the polarizer 16, taking account of control of angle of light. For example, the restriction layer 31 is disposed so that it contacts the display surface side or the rear surface side of the polarizer 16. In addition, since the restriction layer 31 can be easily layered above the polarizer 16, taking account of manufacturing, it is preferred that the restriction layer 31 be disposed on the display surface side of the polarizer 16.

The restriction layer 31 is formed by regularly, two-dimensionally, and planarly arranging a barrier having a predetermined structure on a light transmission layer made of a material having a light transmission property. In addition, the regularly arranged barrier is perpendicular to the display surface of the liquid crystal panel. The shape of the barrier, which is regularly and planarly arranged, is not limited to such examples as long as the two-dimensional plane is filled with the barrier. Examples of the shape of the barrier include a polygon such as a triangle, a square, or a hexagon, a circle, an ellipsis, and a combination thereof. Hereinafter, one of a portion surrounded by the barrier is referred to as a cell. The inside of a cell, namely a portion surrounded by the barrier, may be hollow.

The material having light transmission property is not limited to such examples as long as it accomplishes the foregoing structure and characteristics. Examples of the material having light transmission property include various types of optical plastics and glasses (including spion glass).

The barrier has light absorption property or light opaque property. The thickness of the barrier is, for example, uniform. The height of the barrier, namely the thickness of the restriction layer 31, is, for example, uniform.

The material of the barrier is not limited to such examples as long as it has light absorption properly or light opaque property. Examples of the material of the barrier include black paint, carbon powder, a metal- evaporated film whose reflectivity is not high, and nano-particles having wide light absorption property.

It is preferred that passage of light restricted by the restriction layer 31 be defined on the basis of a light condensing angle of the microlens array 8. For example, light that enters the restriction layer 31 at angles equal to or greater than a light condensing angle of the microlens array 8 is restricted by the restriction layer 31. More specifically, when light entering the liquid crystal layer 6 through the micro lens array 8 is restricted in a range of around ± 45 degrees in the normal direction of the liquid crystal panel 2, it is preferred that light at angles equal to or greater than ± 45 degrees in the normal direction of the liquid crystal panel 2 be decreased by the restriction layer 31. When passage of light is restricted by the restriction layer 31, the light amount can be prevented from largely decreasing. When the incident restriction angle of the restriction layer 31 is increased, although optical characteristics can be improved, the luminance decreases. Thus, it is preferred that the incident restriction angle be adjusted taking account of the performance of the backlight 7 and desired display quality.

The size of each cell can be freely designed as long as the incident angle of light can be restricted. However, taking account of the condition that the size of each sub pixel of the liquid crystal panel 2 is several ten microns (30 to 90 µm), it is preferred that the size of each cell that is free of moire be in the range from half of the size of each sub pixel to one tenth thereof, for example in the range from 3 to 45 µm.

The thickness of the restriction layer 31 can be calculated and designed on the basis of the size of a pattern that satisfies the incident angle of light that is restricted. To decrease light at angles of for example ± 45 degrees or greater in the normal direction of the liquid crystal panel 2, the aperture width of each cell is set to 5 microns and the thickness of the restriction layer 31 (the height of each cell) is set to 5 microns.

When the light diffusion layer 32 is thin, it cannot satisfactorily scatter light, resulting in deterioration of the viewing angle characteristic. In contrast, when the light diffusion layer 32 is very thick, colors of adjacent cells mix or a white glow on a black screen. Thus, the film thickness of the light diffusion layer 32 is set on the basis of the light diffusion performance and desired display quality, namely depending on whether viewing angle has preference to clearness. Taking account of these points, the thickness of the light diffusion layer 32 is in the range for example from 10 nm to 200 µm, preferably, in the range from 0.5 µm to 100 µm, which are around the wavelengths of light, more preferably in the range from 1 µm to 50 µm.

Fig. 2A is a top view showing an example of the structure of a restriction layer 31 having a honeycomb structure. Fig. 2B is a perspective view showing the example of the structure of the restriction layer 31 having the honeycomb structure. As shown in Fig. 2A and Fig. 2B, the honeycomb structure is made by uniformly and planarly arranging a honeycomb-shaped barrier on the restriction layer 31. The inside of each cell surrounded by the barrier has light transmission property. When light at angles of ± 45 degrees or greater in the normal direction of the liquid crystal panel is decreased, the restriction layer 31 is designed so that the thickness of the restriction layer 31 (the height of each cell) becomes nearly equal to the aperture width of each cell. Specifically, the thickness of the restriction layer 31 (the height of each cell) is set to 3 to 45 µm, more specifically, for example, 5 µm. The aperture width of each cell is set to 3 to 45 µm, specifically, for example, 5 µm.

Although the barrier may be made of a material having light scattering property, taking account of display quality, it is preferred to use a material having light absorption property. Instead, the barrier may contain particles whose refractive index is different from that of the portion through which light passes. Instead, the barrier may be directly formed in a light transmission layer such as a glass plate by a high output laser.

The light diffusion layer 32 is formed on the display surface side of the restriction layer 31. The light diffusion layer 32 diffuses illumination light that passed through the restriction layer 31. The light diffusion layer 32 is commercially available. The light diffusion layer 32 is made of for example particles (beads) and filler with which space of the particles is filled. Examples of the particles include inorganic particles such as titanium oxide or barium sulfate. The material that composes the light diffusion layer 32 is not limited to such examples as long as it has the foregoing structure and property. Examples of the material of the light diffusing layer 32 include various types of optical plastics and glasses (including spion glass).

### (2) Manufacturing method of viewing angle improvement means 10

Next, an example of the manufacturing method of the viewing angle improvement means 10 having the foregoing structure will be described. In the following, for example, a patterning method known in the conventional semiconductor technologies (lithography technologies) can be used.

First, a commercially available ultraviolet ray hardening resin having transparency (hereinafter referred to as UV hardening resin) is mixed with polymer particles whose refractive index is different from that of the UV hardening resin (this polymer is for example Techpolymer made by Sekisui Plastics Co., Ltd). This mixture is coated on a polyethylene terephthalate film (PET) having a thickness of for example 100 mm. Thereafter, by irradiating the laminate with ultraviolet rays in a nitrogen atmosphere, the resultant laminate is hardened. As a result, a light diffusion layer 32 having a thickness of for example 5 µm is obtained.

Thereafter, by coating UV hardening resin having light transmission property on the light diffusion layer 22, a transparent UV hardening resin layer having a film thickness of for example 5 µm is obtained. Thereafter, a photomask having a pattern corresponding to the honeycomb structure as shown in Fig. 2 is layered on the transparent UV hardening resin and then irradiated with ultraviolet rays under nitrogen atmosphere. Thereafter, a portion that is not covered with the photomask is removed by a solvent.

Thereafter, black paint paste of which carbon is dispersed in acrylic resin is coated on the film with a squeegee in such a manner that the grooves of the pattern are filled with the black paint. After the paint dries, the remaining paint on the front surface is removed with waste cloth. As a result, a laminate of the restriction layer 31 and the light diffusion layer 32 is obtained. The black paint is commercially available. As the black paint, one of hardening type and non-hardening type may be used. When the hardening type is used, it is preferred that after the paint dries and the remaining paint is wiped out, the paint be hardened.

### (3) Display operation of liquid crystal display apparatus 1

Next, the display operation of the liquid crystal display apparatus 1 that has the foregoing structure will be described.

Light is emitted from the backlight 7. The microlens array 8 improves the directivity of the light to the entire surface of the panel. The polarized light selective transmission film 9 causes the polarization plane of the light to match that of the polarizer 16 disposed on the near side of the backlight 7. Thereafter, the light passes through the polarizer 25.

The polarizer 25 plane-polarizes the light. The plane-polarized light enters the liquid crystal layer 6. The polarized plane of the light is controlled with the liquid crystal aligned by the electric field. As a result, the amount of light that passed through the polarizer 16 disposed above the liquid crystal panel 2 is controlled. Thereafter, the light passes through the color filter 12. The refractive index of the light is compensated by the optical compensation film 15. Thereafter, the light passes through the polarizer 16. Thereafter, light at angles equal to or greater than a predetermined value in the normal direction of the liquid crystal panel 2 is decreased by the restriction layer 31. Thereafter, the light passes through the restriction layer 31. The light diffusion layer 32 diffuses the light.

According to the first embodiment of the present invention, the following effects can be obtained.

In a very simple method, a wide viewing angle and good optical characteristics (contrast, gradation, and color tone) can be accomplished. In addition, since it is not necessary to laminate many optical compensation films, the cost of the liquid crystal display apparatus can be reduced. In addition, since optical compensation films can be adhered without taking account of their optical axis, the manufacturing efficiency can be remarkably improved.

When the present invention is applied, conventional optical compensation films having a wide viewing angle are not required. Thus, the number of optical compensation films can be decreased. As a result, the brightness of the screen of the apparatus can be improved. When optical compensation films 15 and 25 having matched characteristics are used within a limited range of incident angles, optical characteristics can be improved. In this case, it is necessary to take account of an optical compensation only for viewing angles narrow than those of the conventional optical compensation films, the optical compensation films can be simplified or can easily have an advanced performance as effects of the present invention.

Next, a second embodiment of the present invention will be described.

Fig. 3 is a sectional view showing an example of the structure of a liquid crystal display apparatus 1 according to the second embodiment of the present invention. As shown in Fig. 3, in the liquid crystal display apparatus 1, viewing angle improvement means 10 has a restriction layer of which a barrier as a fundamental structural element is two-dimensionally arranged and particles dispersed in the barrier.

Except for the viewing angle improvement means 10, the structure of the liquid crystal display apparatus 1 according to the second embodiment is the same as that of the liquid crystal display apparatus 1 according to the first embodiment. Thus, the description of the structure of the liquid crystal display apparatus 1 according to the second embodiment will be omitted.

Next, a third embodiment of the present invention will be described.

Fig. 4 is a sectional view showing an example of the structure of a liquid crystal display apparatus 1 according to the third embodiment of the present invention. As shown in Fig. 4, in the liquid crystal display apparatus 1, viewing angle improvement means 10 has a restriction layer 31 of which a barrier as a fundamental structural element is two-dimensionally arranged and concave lenses 33 disposed on the display surface side of cells as a fundamental structural element. Particles may be dispersed in the concave lenses 33 to scatter light that passed through the restriction layer 31. In this case, the effect of diffusion of the concave lenses 33 can be further improved.

Except for the viewing angle improvement means 10, the structure of the liquid crystal display apparatus 1 according to the third embodiment is the same as that of the liquid crystal display apparatus 1 according to the first embodiment. Thus, the description of the structure of the liquid crystal display apparatus 1 according to the third embodiment will be omitted.

Next, a fourth embodiment of the present invention will be described.

Fig. 5 is a sectional view showing an example of the structure of a liquid crystal display apparatus 1 according to the fourth embodiment of the present invention. Disposed on the front surface of a liquid crystal panel 2 is only a light diffusion layer 32. A light insulation film disposed on one primary surface of a glass substrate 11 has a function of decreasing light at angles equal to or greater than a predetermined value in the normal direction of the liquid crystal panel 2 in addition with functions of the conventional light insulation film, which improves contrast, prevents colors of color materials from mixing, and shields an a-Si film of a TFT (Thin Film Transistor) from light. The thickness of the light insulation film is selected on the basis of the incident angle of light to be restricted. The thickness of the light insulation film is for example in the range from 3 to 45 µm, specifically, for example, 5 µm.

Except for the light diffusing layer 32 and the light insulation film, the structure of the liquid crystal display apparatus 1 according to the fourth embodiment is the same as that of the liquid crystal display apparatus 1 according to the first embodiment. Thus, the description of the structure of the liquid crystal display apparatus 1 according to the fourth embodiment will be omitted.

Next, examples of the present invention will be described. However, it should be noted that the present invention is not limited to such examples.

### Sample 1

A louver-shaped groove pattern was directly formed on a PMMA (polymethyl methacrylate) film. As a result, a louver film was obtained (refer to Fig. 6). The width of each groove was around 5 µm, the depth thereof was 20 nm, the length of one side of a square-shaped pattern as an opening portion was around 22 nm, and the aperture ratio was 66.3 %.

### Sample 2

In the same manner as sample 1, a louver film was obtained. After carbon paste was coated on the louver film and then dried, the remaining carbon paste was wiped out from the front surface of the louver film. As a result, the louver film of which its grooves were filled with carbon paste was obtained (refer to Fig. 7). Sample 3

In the same manner as sample 2, a louver film of which its grooves were filled with carbon paste was obtained. Thereafter, a commercially available diffusion film having a total light transmissivity of 91.5 % and a haze value of 41.0 was adhered to the louver film. As a result, an optical film was obtained.

### Sample 4

In the same manner as sample 1, a louver film was obtained. Thereafter, aluminum was evaporated on the louver film. Thereafter, the evaporated aluminum was wiped out from the front surface of the louver film with unwoven cloth soaking ethanol. As a result, the louver film of which its grooves were filled with aluminum was obtained (refer to Fig. 8).

### Sample 5

In the same manner as sample 4, a louver film of which its grooves were filled with aluminum was obtained. Thereafter, a commercially available diffusion film having a total light transmissivity of 91.5 % and a haze value of 41.0 was adhered to the louver film. As a result, an optical film was obtained.

### Measurement of transmissivity and haze value

Next, total light transmissivity (τₜ), diffusion transmissivity (τ_{d}), and haze value (H) of each of samples 1 to 5 were measured using a haze meter (Murakami Color Research Laboratory HM-150).

Table 1 shows measured results of total light transmissivity (τₜ), diffusion transmissivity (τ_{d}), and haze value (H). Table 1 also shows total light transmissivity (τₜ), diffusion transmissivity (τ_{d}), and haze value (H) of a commercially available diffusion film.

**Table 1**

| sample | sample 1 | sample 2 | sample 3 | sample 4 | sample 5 | diffusion film |
|---|---|---|---|---|---|---|
| structure | only louver structure | filled with carbon paste | sample 2 + diffusion film | aluminum evaporation | sample 4 + diffusion film | |
| total light transmissivity (τₜ) % | 90.7 | 61.1 | 60.9 | 80.0 | 77.5 | 91.5 |
| diffusion transmissivity (τ_{d}) % | 30.6 | 8.8 | 29.2 | 32.8 | 46.9 | 37.5 |
| haze value (H) | 33.7 | 14.4 | 48.0 | 41.0 | 60.5 | 41.0 |

Table 1 shows that since in sample 2 of which grooves are filled with carbon paste, the total light transmissivity (61.1 %) is nearly equal to the aperture ratio (66.5 %), sample 2 restricts light as designed. In addition, table 1 shows that in sample 4, which is aluminum evaporated, total light transmissivity and diffusion transmissivity are higher than those of others. However, it is thought that higher total light transmissivity and diffusion transmissivity result from reflection from the aluminum film.

### Measurement of contrast and color distribution

Films of sample 4 and sample 5 were adhered to evaluation panels and their contrast and color distribution were measured using an EDLIM Ezcontrast 88. The evaluation panels were made by removing polarizing plates from PVA liquid crystal panels made by Samsung Electronics Co., Ltd. and then adhering polarizing plates that do not have an optical compensation layer to the panels.

Fig. 9 shows a color temperature distribution of the evaluation panels. Fig. 10 shows a color temperature distribution of an evaluation panel having the louver film of sample 4. Fig. 11 shows a color temperature distribution of an evaluation panel having the optical film of sample 5.

Fig. 9 to Fig. 11 show that the following fact. With the louver film, a white glow can be suppressed on the wide angle side. In addition, since the diffusion film just diffuses light that is decreased, it is clear that the color distribution does not vary.

Fig. 12 and Fig. 13 are graphs showing measured results of contrasts. Fig. 13 is a bar graph showing contrasts at viewing angles of 30 degrees, 40 degrees, 50 degrees, and 60 degrees to clarify the difference of contrasts.

Contrast is the lowest when polarizing plates are placed in crossed Nichol state at 45 degrees. Fig. 12 and Fig. 13 show measured results of variations of contrasts at viewing angles in this state. Fig. 12 and Fig. 13 show that the larger the viewing angle, the higher the contrast effect of the louver film. When the louver film is used, the contrast effects are improved for around 17 % at a viewing angle of 30 degrees, 43 % at a viewing angle of 40 degrees, 66 % at a viewing angle of 50 degrees, and 87 % at a viewing angle of 60 degrees in comparison with the structure that does not use the louver film.

Thus, it is clear that the louver film according to the present invention is effective to improve the viewing angle. In addition, when the shape, aperture ratio, and so forth of the louver are improved, it can be expected that the viewing angle will be further improved.

Although the first to fourth embodiments of the present invention have been described, it should be noted that the present invention is not limited to these embodiments. Instead, various modifications may be made based on the sprit of the present invention.

For example, numeric values in the first to fourth embodiments are just examples. When necessary, different numeric values may be used.

Moreover, in the first to fourth embodiments, when necessary, the thickness of the restriction layer 31 or the light insulation film may be changed in the planar direction of the liquid crystal panel 2. For example, the thickness of the restriction layer 31 or the light insulation layer may be increased outwardly from the center of the liquid crystal panel 2. Thus, when for example a large screen type liquid crystal panel is viewed, incident light can be restricted on the basis of the difference of viewing angles at each portion of the screen. As a result, a liquid crystal panel that has a viewing angle and display quality suitable for the application can be obtained.

In addition, according to the first to third embodiments, when it is difficult to obtain a self supporting film because the viewing angle improvement means 10 is thin, the viewing angle improvement means 10 may be disposed above a transparent supporting member (glass plate, plastic film, or the like). Instead, viewing angle improvement means may be disposed above the polarizer 16. In this case, it is preferred that a process that does not largely affects the polarizer 16 be used.

## Claims

1. A liquid crystal display apparatus which irradiates a rear surface of a liquid crystal panel with light and displays a screen, comprising:
viewing angle improvement means for decreasing light at angles equal to or greater than a predetermined value in a normal direction of the liquid crystal panel from light emitted from a light source and diffusing light at angles smaller than the predetermined value in the normal direction of the liquid crystal panel on a display surface side of the liquid crystal panel.

2. The liquid crystal display apparatus as set forth in claim 1,
wherein the viewing angle improvement means has:
a restriction layer which decreases the light at angles equal to or greater than the predetermined value in the normal direction of the liquid crystal panel from the light emitted from the light source; and
a light diffusion layer which diffuses light which passed through the restriction layer on the display surface side of the liquid crystal panel.

3. The liquid crystal display apparatus as set forth in claim 2,
wherein the restriction layer has a barrier which is two-dimensionally arranged; and
wherein the barrier has light absorption property.

4. The liquid crystal display apparatus as set forth in claim 2,
wherein particles which scatter the light which passed through the restriction layer are dispersed in the diffusion layer.

5. The liquid crystal display apparatus as set forth in claim 1,
wherein the viewing angle improvement means has:
a restriction layer on which a barrier having light absorption property is two-dimensionally arranged; and
diffusion means which is disposed in the barrier and which diffuses light, and
wherein the viewing angle restriction means is disposed on a full screen side of the liquid crystal panel.

6. The liquid crystal display apparatus as set forth in claim 5
wherein the diffusion means is particles dispersed in the barrier.

7. The liquid crystal display apparatus as set forth in claim 5,
wherein the diffusion means is a lens disposed in the barrier.

8. The liquid crystal display apparatus as set forth in claim 7,
wherein particles which diffuses light are dispersed in the lens.

9. An optical film, comprising:
a restriction layer which decreases light at angles equal to or greater than a predetermined value in a normal direction of a liquid crystal panel from light emitted from the liquid crystal panel.

10. The optical film as set forth in claim 9, further comprising:
a light diffusion layer which diffuses light which passed through the restriction layer.

11. A liquid crystal panel, comprising:
a first substrate and a second substrate oppositely disposed with a predetermined distance through a spacer; and
a liquid crystal layer disposed between the first substrate and the second substrate,
wherein the second substrate has:
a light insulation film which is disposed on an opposite side of the first substrate and which decreases light at angles equal to or greater than a predetermined value in a normal direction of a liquid crystal panel; and
a color film disposed at an opening portion of the light insulation film.

12. A liquid crystal display apparatus which irradiates a rear surface of a liquid crystal panel with light and displays a screen, comprising:
a liquid crystal panel; and
a diffusion layer which is disposed on a display surface side of the liquid crystal panel,
wherein the liquid crystal panel has:
a first substrate and a second substrate oppositely disposed with a predetermined distance through a spacer; and
a liquid crystal layer disposed between the first substrate and the second substrate,
wherein the second substrate has:
a light insulation film which is disposed on an opposite side of the first substrate and which decreases light at angles equal to or greater than a predetermined value in a normal direction of the liquid crystal panel, and
a color film disposed at an opening portion of the light insulation film.
